# EUROPÄISCHE PATENTSCHRIFT

(11) **EP 2 864 222 B1**
(45) Veröffentlichungstag und Bekanntmachung des Hinweises auf die Patenterteilung: **24.08.2016**
(21) Anmeldenummer: 13736474.1
(22) Anmeldetag: 21.06.2013
(51) Int. Cl.: B60P 7/10, B65D 90/00, B60P 7/13

(54) **VERRIEGELUNGSVORRICHTUNGSANORDNUNG**
SYSTEM COMPRISING A LOCKING DEVICE
SYSTÈME COMPRENANT UN DISPOSITIF DE VERROUILLAGE

(30) Priorität: 26.06.2012 DE 202012102343 U
(43) Veröffentlichungstag der Anmeldung: 29.04.2015
(73) Patentinhaber: Neuland Beton H. Burgis Kg (GmbH & Co.), 21079 Hamburg (DE)
(72) Erfinder: METTERNICH, Heinz-Rüdiger, 21279 Eversen-Heide (DE)
(74) Vertreter: Hansen, Jochen
(86) Internationale Anmeldenummer: PCT/DE2013/100227
(87) Internationale Veröffentlichungsnummer: WO 2014/000732

(56) Entgegenhaltungen:
- EP-A1- 2 308 719
- WO-A1-2008/095605
- WO-A1-2011/071384
- WO-A2-2007/142531

## Beschreibung

Die Erfindung betrifft eine Verriegelungsvorrichtung zur Verriegelung eines Containers, der standardisierte Eckbeschläge mit einer Öffnung in einer Wandung aufweist, auf einer Ladefläche, die eine standardisierte Aufnahmeöffnung aufweist, wobei die Verriegelungsvorrichtung in der standardisierten Aufnahmeöffnung der Ladefläche geführt ist und mit einem Verriegelungskopf hervorsteht, wobei der Verriegelungskopf durch die Öffnung hinter die Wandung des Eckbeschlags zur Verriegelung des Containers auf der Ladefläche greifen kann, mit den Schritten einer unter der standardisierten Aufnahmeöffnung der Ladefläche angeordneten Nutenbuchse, in der die Verriegelungsvorrichtung in einer ersten Stellung unter die Ladefläche versenkbar geführt ist und auf der sich die Verriegelungsvorrichtung über die Ladefläche nach oben vorstehend in einer zweiten Stellung abstützt, und einem Sicherungsring, der die Verriegelungsvorrichtung unterhalb der Ladefläche in einer Montageöffnung in seiner ersten Stellung hält.

Derartige Verriegelungsvorrichtungen sind als sog. Twist-Lock zur Befestigung von Containern auf Containertragwagen, insbesondere Containerauflieger oder auch Chassis genannt, bekannt. Dabei handelt es sich um ein versenkbares Twist-Lock, das je nach Anforderung unter die Ladefläche versenkt werden kann, um in dieser ersten Stellung beispielsweise 40 ft Container auf dem Chassis verladen zu können, während der Twist-Lock in der zweiten, über die Ladefläche hervorstehenden Stellung positioniert wird, wenn auf dem Chassis beispielsweise zwei 20 ft Container verladen werden.

Der Twist-Lock weist einen Drehzapfen mit einem länglichen Pilzkopf auf, der bei der Beladung mit einem Container in die Öffnung des Eckbeschlags über die Pilzform zentrierend eingeführt wird. Eine Bedienperson verdreht dann den Drehzapfen um ca. 90°, so dass der längliche Pilzkopf hinter die Wandung des Eckbeschlags greift, womit eine formschlüssige Verbindung zwischen Container und Ladefläche hergestellt ist. Weiter wird dann vom Bediener über eine Spannmutter, die auf den mit einem Gewinde versehenen Drehzapfen geführt ist, der Pilzkopf des Drehzapfens derart verspannt, dass die Wandung des Eckbeschlags des Containers auf die Ladefläche des Chassis gepresst wird. Damit ist der Container spielfrei auf dem Chassis festgesetzt.

Zum Versenken einer derartigen Verriegelungsvorrichtung wird die um den Drehbolzen unterhalb der Ladefläche angeordnete Nutenbuchse um ca. 90° verdreht, so dass der gesamte Twist-Lock in der standardisierten Aufnahmeöffnung der Ladefläche versenkt werden kann. Der Twist-Lock kann durch den auf der Montageöffnung aufgeschraubten Sicherungsring nicht nach unten durchfallen, sondern liegt auf diesem Sicherungsring auf.

Diese bekannten Verriegelungsvorrichtungen (Twist-Locks) sind weltweit millionenfach im Einsatz. Nachteilig ist, dass zum Verriegeln und Verspannen eines Containers auf der Ladefläche stets eine manuelle Betätigung durch eine Bedienperson erforderlich ist.

Ferner sind (halb-)automatische Verriegelungsvorrichtungen zum Festsetzen eines Containers auf einer Ladefläche aus der WO 2012/022326 A1 bekannt, die selbsttätig vom Container bei seiner Beladung auf der Ladefläche ausgelöst werden. Diese Verriegelungsvorrichtung weist federvorbelastete Verriegelungshebel auf, die beim Aufladen eines Containers den Eckbeschlag federbelastet hintergreifen. Dabei ist zusätzlich eine Arretierung der Verriegelungshebel in dieser geschlossenen Position vorgesehen. Zum Entladen muss diese Arretierung gesondert manuell entriegelt werden. Dann kann der Container mit seinem Eckbeschlag von der Ladefläche abgehoben werden, wobei die Verriegelungshebel federnd ihre Verriegelungsstellung freigeben. Eine anschließende Beladung ist dann wieder möglich.

Weiter ist aus der WO 2008/095605 A1 eine (halb-)automatische Verriegelungsvorrichtung mit einem Pilzkopf bekannt, der von einer Freigabestellung, bei der ein Containereckbeschlag über den Pilzkopf führbar ist, in eine Verriegelungsstellung automatisiert durch das auf einen Nocken auflastende Containergewicht beim Beladen verdreht wird. Mit dem Verdrehen wird der Eckbeschlag von dem Pilzkopf hintergriffen und mit dem Absenken auf der Ladefläche verspannt. Dafür weist die Verriegelungsvorrichtung als mechanisches Element zur Ausführung der Verriegelungsbewegung des Pilzkopfes einen zweiteiligen Zylinder mit einer darauf schräg für die Führung eines Zapfens am Schaft des Pilzkopfes eingebrachten Nockenspur auf.

Aus der WO 2011/071384 A1 ist eine automatisierte Containerverriegelungsvorrichtung bekannt, die über in einen Balg beaufschlagte Druckluft betätigt wird. Dabei wird die Verriegelungsvorrichtung von einer Grundstellung, bei der ein Container mit seinem Eckbeschlag aufstellbar ist, in eine Verriegelungsstellung verstellt. Für das Hintergreifen des Containereckbeschlags sind zwei Haken in einer Scherenanordnung vorgesehen.

Die WO 2007/142531 A2 beschreibt einen (halb-)automatischen Verriegelungsmechanismus für Containereckbeschläge, wobei hier wiederum zwei Haken in einer Scherenanordnung zum Hintergreifen des Containereckbeschlags vorgesehen sind, die von der Gewichtskraft des zu verriegelnden Containers automatisiert betätigt werden.

Ferner ist aus der EP 2 308 719 A1 eine (halb-)automatische Verriegelungsvorrichtung für Container auf einem Nutzfahrzeug bekannt, wobei ein pilzförmiger Spannkopf in einer buchsenartigen Steuerhülse mit zwei gegenüberliegenden spiralförmigen Steuerkurven eine Dreh- und Absenkbewegung beim Verriegeln vollführt, wiederum ausgelöst von der Gewichtskraft des zu verriegelnden Containers.

Nachteilig an diesen automatischen Verriegelungen ist, dass ein nachträgliches Umrüsten von vorhandenen Containeraufliegern sehr aufwendig ist, da an den gewünschten Verriegelungspositionen Platz für den automatischen Verriegelungsmechanismus geschaffen werden muss.

Aufgabe der Erfindung ist es, eine automatische Verriegelungsvorrichtung anzugeben, die auch bei vorhandenen Containeraufliegern einfach umgerüstet werden kann.

Gelöst wird diese Aufgabe mit einer Verriegelungsvorrichtung gemäß Anspruch 1.

Dadurch, dass die Verriegelungsvorrichtung einen (halb )automatischen Verriegelungsmechanismus in einem zylindrischen Gehäuse hat, wobei das zylindrische Gehäuse durch die Nutenbuchse, die Montageöffnung und den Sicherungsring geführt ist, kann ein über die Montageöffnung in einer standardisierten Aufnahmeöffnung einer Ladefläche, insbesondere eines Containeraufliegers montiertes Twist-Lock unmittelbar ohne zusätzliche Umrüstungsarbeiten gegen einen automatischen Verriegelungsmechanismus ausgetauscht werden. Das zylindrische Gehäuse enthält dabei die für den automatischen Verriegelungsmechanismus erforderlichen Bauteile, wobei die Länge und der Außendurchmesser des zylindrischen Gehäuses so ausgebildet sind, dass es durch die Montageöffnung an die standardisierte Aufnahmeöffnung angesetzt und mit dem Sicherungsring fixiert werden kann. Dabei bleibt die Funktionsfähigkeit wie bei einem bisher dort montierten Twist-Lock mit der Versenkungsmöglichkeit über die Betätigung einer Nutenbuchse erhalten. Vorteilhaft ist jedoch die Verriegelungsvorrichtung mit einem automatischen Verriegelungsmechanismus ausgestattet. Dies ist insbesondere gewährleistet, wenn das zylindrische Gehäuse einen Außendurchmesser d von d ≤ 82,5 mm und eine Höhe h von h ≤ 97 mm aufweist.

Dadurch, dass der Verriegelungskopf aus einem ersten Verriegelungshebel und einem zweiten Verriegelungshebel gebildet ist, wobei die Verriegelungshebel in Art eines Scherenmechanismus um eine senkrecht zu einer Be- und Entladerichtung orientierten und in dieser Richtung verschiebbaren Achse schwenkbar angeordnet sind und die Achse in Beladeposition der Verriegelungsvorrichtung in Richtung zum Eckbeschlag des Containers und in ihrer Grundstellung in Gegenrichtung verschoben ist, ist ein federbelasteter, mechanischer Verriegelungsmechanismus in dem kleinen zylindrischen Gehäuse untergebracht, der die aus der WO 2012/022326 A1 bekannte automatische Verriegelung von auf der Ladefläche abgeladenen Containern erlaubt. Damit wird erreicht, dass beim Beladen die Verriegelungshebel der Verriegelungsvorrichtung gegen die Kraft der Feder nach innen geschwenkt und dabei zwangsweise über die Kniehebelanordnung angehoben werden. Wenn die Öffnung des Eckbeschlags an den Auflaufschrägen vorbeigerutscht ist, springen die Verriegelungshebel aufgrund der Federvorbelastung wieder in ihre Grundstellung, wobei sich die Verriegelungsköpfe der Verriegelungshebel zwangsgeführt über die Kniehebelanordnung und die verschiebbar geführte Achse wieder absenken, so dass sich die Verriegelungsköpfe in ihrer Verriegelungsstellung, nachfolgend Grundstellung genannt, auf der Innenseite der Wandung des Eckbeschlages ablegen und somit den Eckbeschlag eng anliegend hintergreifen.

Die beiden Verriegelungshebel sind auf der Achse in einer Scherenanordnung angeordnet. Durch die doppelte, beidseitige Verriegelung wird eine hohe Zuverlässigkeit der Verriegelungsvorrichtung erreicht und eine hohe Losbrechkraft aus dem Verriegelungszustand gewährleistet. Um einen übereinstimmenden Bewegungsablauf der beiden Verriegelungshebel in der Scherenanordnung sicherzustellen, ist jedem Verriegelungshebel ein Kniehebel zugeordnet. Wenn zwischen der Achse und dem Fixpunkt die Feder als wenigstens eine Zugfeder eingesetzt ist, ist eine konstruktiv einfach gestaltete Vorbelastung der Verriegelungshebel in ihre Grundstellung (Verriegelungsstellung) gewährleistet.

Um ein unbeabsichtigtes Abheben des Containers, beispielsweise im Straßen- oder Eisenbahnverkehr, zu verhindern, ist ein Sperrmittel vorgesehen. Um ein unerwünschtes Lösen des Sperrmittels zu verhindern, ist es in Richtung der Sperrstellung Feder belastet. Das Sperrmittel verhindert in seiner Sperrstellung beispielsweise ein Rückschwenken, da es am Kniehebelgelenk angreift, und erlaubt in einer Freigabestellung ein Verstellen der Verriegelungshebel aus der Grundstellung in die Beladeposition.

Dadurch, dass das Sperrmittel eine Laderastposition aufweist, in der das Sperrmittel mit einer Klappfalle in der Freigabestellung arretiert ist, wobei beim Beladen durch das Verschwenken der Verriegelungshebel die Klappfalle gegen die Kraft einer Druckfeder verschwenkt wird und die Laderastposition freigegeben wird, kann das Sperrmittel so voreingestellt werden, dass ein Beladevorgang ohne gleichzeitige manuelle Betätigung des Sperrmittels möglich ist. Ferner wird durch das Auslösemittel unmittelbar mit dem Erreichen des Beladezustandes das Sperrmittel aktiviert, so dass eine Verstellung aus der Verriegelungsposition (Grundstellung) und somit ein Abheben/Entladen des Containers nicht möglich ist.

Wenn das Sperrmittel ein Betätigungselement hat, mit dem eine Bedienperson die Laderastposition einstellen kann, in der das Sperrmittel für den Entladevorgang und den nächsten Beladevorgang in der Freigabestellung arretiert ist, kann das Freigeben des Sperrmittels vor dem Entladevorgang erfolgen.

Dadurch, dass zur Bildung eines Sperrmittels die verschiebbare Achse über der Außenseite des zylindrischen Gehäuses vorsteht und eine Nutenbuchse diametral gegenüberliegend zwei umgekehrt T-förmige Langlöcher aufweist, in die die überstehende, verschiebbare Achse eingreift, wird in alternativer Weise erreicht, dass eine Verstellung aus der Verriegelungsposition (Grundstellung) und somit ein Abheben/Entladen des Containers sicher blockiert ist. Bevorzugt ist dabei die um ihre Achse schwenkbar gelagerte Nutenbuchse in Richtung ihrer Grundstellung Feder vorbelastet, wobei in Grundstellung die vorstehende, verschiebbare Achse an einem Ende der T-förmigen Langlöcher sitzt.

Wenn das Sperrmittel eine Laderastposition aufweist, in der das Sperrmittel mit einem Schwenkhebel in der Freigabestellung arretiert ist, wobei beim Beladen durch die Auflast des Containers der Schwenkhebel gegen eine Federblattbelastung zurückschwenkt, womit die Nutenbuchse aufgrund der Federvorbelastung in ihre Mittelstellung verschwenkt, wird eine Vorauslösung erreicht, so dass anschließend ohne weitere manuelle Tätigkeit ein Entladen des Containers möglich ist.

Wenn die Verriegelungshebel an ihrer auf der Wandung innerhalb des Eckbeschlags zeigenden Seite eine Schulter haben, die in Grundstellung im Wesentlichen orthogonal zur Be- und Entladerichtung auf der Wandung innerhalb des Eckbeschlags aufliegen und beim Entladen durch das Verschwenken in die Beladeposition eine Auflaufschräge bilden, die das Verschwenken der Verriegelungshebel in die Beladeposition gegen die Kraft der Feder ermöglichen, wird ein Entladen mit äußerst geringer Freigabekraft gewährleistet.

Nachfolgend werden zwei Ausführungsbeispiele der Erfindung anhand der beiliegenden Figuren detailliert beschrieben.

Darin zeigt:
- Fig. 1: ein erstes Ausführungsbeispiel in einer Explosionsdarstellung die für die Montage der Verriegelungsvorrichtung an einer Ladefläche erforderlichen Bauteile,
- Fig. 2: in einer räumlichen Ansicht die in einer Ladefläche vorgesehene Verriegelungsvorrichtung gemäß Fig. 1 in einer ersten Stellung,
- Fig. 3: die in Fig. 2 dargestellte Verriegelungsvorrichtung in einer zweiten Stellung,
- Fig. 4a - c: ein Beladevorgang mit automatischer Verriegelung,
- Fig. 5: die Verriegelungsvorrichtung der Figuren 1 bis 4 mit ihrem Verriegelungsmechnismus,
- Fig. 6: in einer räumlichen Detailansicht ein Sperrmittel für die Verriegelungsvorrichtung gemäß Fig. 1 bis 5,
- Fig. 7: eine Verriegelungsvorrichtung in räumlicher Ansicht in einem zweiten Ausführungsbeispiel und
- Fig. 8: die Vorrichtung gemäß Fig. 7 in räumlicher, teils geschnittener Ansicht.

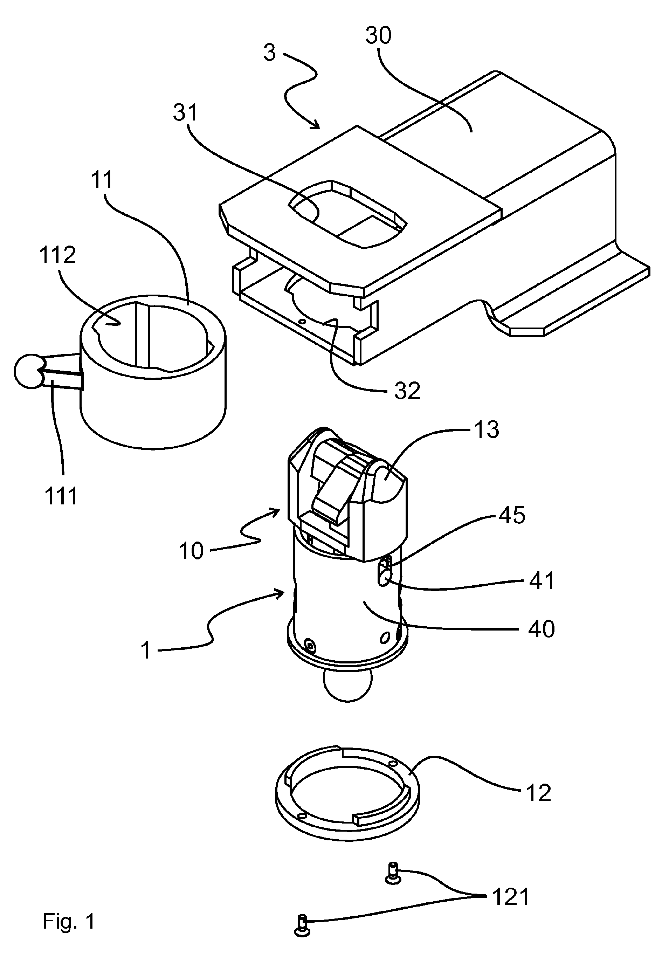

In Fig. 1 sind in einer Explosionsdarstellung die für die Montage an einem Cotainertragwagen, insbesondere Containerauflieger, erforderlichen Bauteile in einem ersten Ausführungsbeispiel dargestellt. Der Containerauflieger hat eine Ladefläche 3, von dem eine Quertraverse 30 im Anschnitt dargestellt ist, an dessen äußerem Ende in dieser Ladefläche 3 eine Aufnahmeöffnung 31 vorgesehen ist. Unterhalb dieser Aufnahmeöffnung 31 ist in der als Hohlprofil ausgebildeten Quertraverse 30 eine Montageöffnung 32 ausgebildet.

Neben der seitlichen Öffnung der Quertraverse 30 ist eine Nutenbuchse 11 dargestellt, die in die Quertraverse 30 zwischen der Aufnahmeöffnung 31 und der Montageöffnung 32 einführbar ist. Die Nutenbuchse 11 weist einen Betätigungshebel 111 auf, der aus der Quertraverse 30 herausschaut.

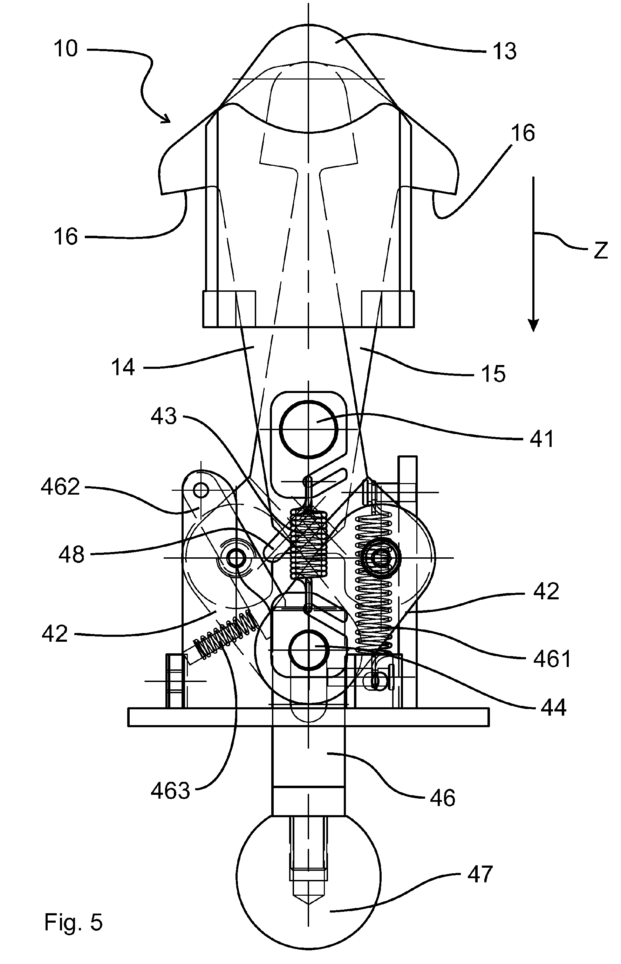

Unterhalb der Quertraverse 30 ist in der Explosionsdarstellung der Fig. 1 eine Verriegelungsvorrichtung 1 dargestellt. Die Verriegelungsvorrichtung 1 weist einen Verriegelungskopf 10 auf und enthält unterhalb des Verriegelungskopfes 10 einen Verriegelungsmechanismus 4 (siehe beispielsweise Fig. 5) der in einem zylindrischen Gehäuse 40 untergebracht ist.

Unterhalb der Verriegelungsvorrichtung 1 ist ein Sicherungsring 12 mit zugehörigen Befestigungsschrauben 121 dargestellt, der nach Einschieben der Nutenbuchse 11 zwischen Aufnahmeöffnung 31 und Montageöffnung 32 und von unten Einführen der Verriegelungsvorrichtung 1 durch die Montageöffnung 32 und die Nutenbuchse 11 auf die Montageöffnung 32 aufgesetzt und dort festgeschraubt wird.

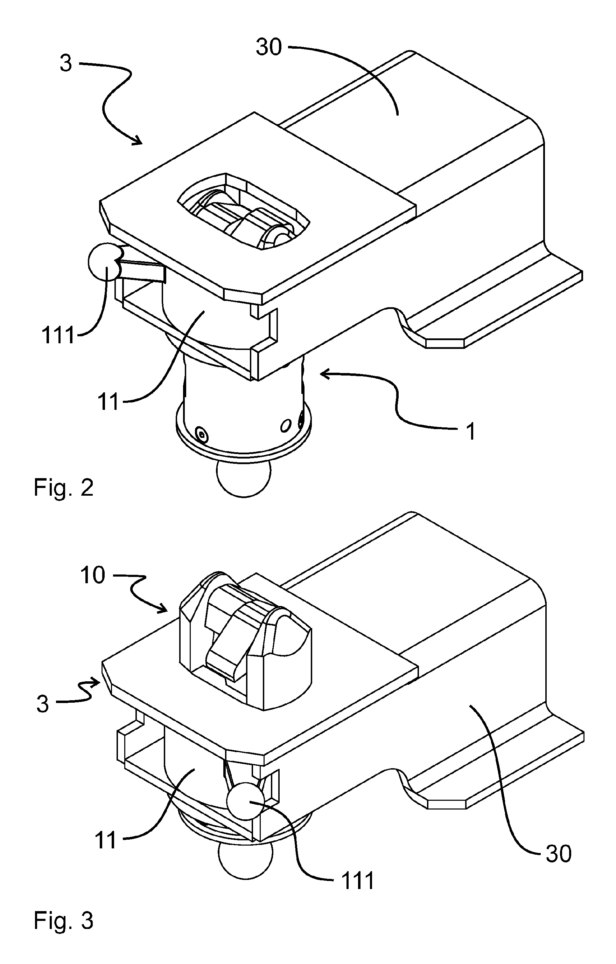

In Fig. 2 ist wiederum in räumlicher Ansicht der Abschnitt der Quertraverse 30 der Ladefläche 3 des Containeraufliegers dargestellt. Die an der Quertraverse 30 im Bereich der Aufnahmeöffnung 31 und Montageöffnung 32 montierte Verriegelungsvorrichtung 1 befindet sich in dem in Fig. 2 dargestellten Zustand in einer ersten Stellung, bei dem der Verriegelungskopf 10 in der Aufnahmeöffnung 31 unterhalb der Ladefläche 3 versenkt ist. Entsprechend ist die Nutenbuchse 11 mit ihrem Betätigungshebel 111 in der in Fig. 2 nach links orientierten Stellung dargestellt.

In Fig. 3 ist die Verriegelungsvorrichtung 1 in einer zweiten Stellung dargestellt, bei der der Verriegelungskopf 10 über die Ladefläche 3 hervorsteht und zur Verriegelung mit einem Container Eckbeschlag bereit steht. Der Betätigungshebel 111 der Nutenbuchse 11 ist entsprechend in die rechte Position verschwenkt, womit die Nutenbuchse 11 etwa um 90° verdreht ist. Wie aus Fig. 1 ersichtlich, hat die Nutenbuchse 11 eine derart profilierte Öffnung 112, dass in der ersten Stellung der Verriegelungskopf 10 dort hindurch passt und in der zweiten Stellung die seitlich vorstehenden Kanten des Verriegelungskopfes 10 auf der Nutenbuchse 11 im Bereich der größeren Wandungsstärke aufliegt, also über die Ladefläche 3 vorsteht.

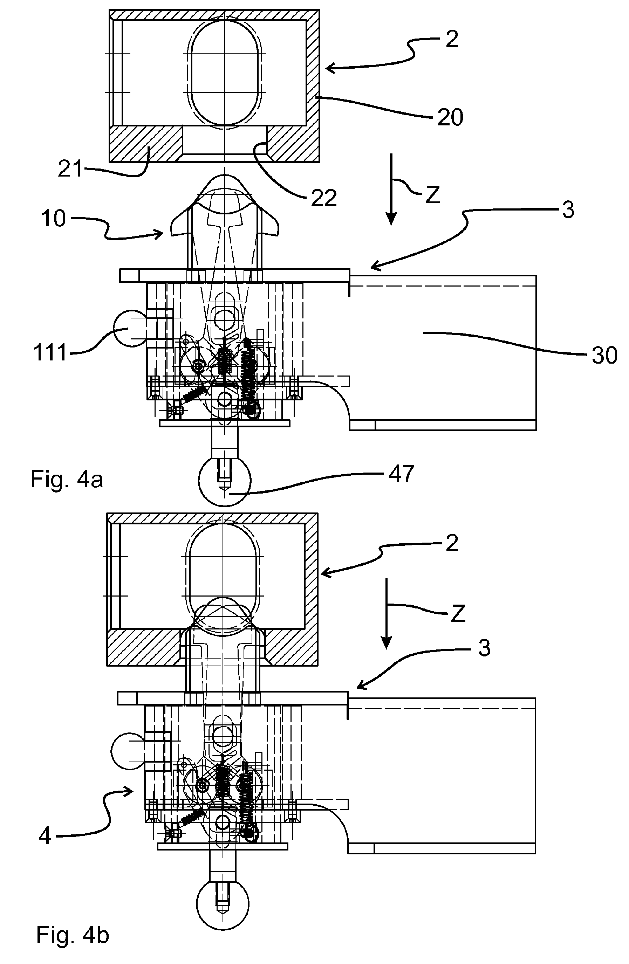

Dieses Prinzip ist aus den versenkbaren Twist-Lock-Verriegelungen bekannt und hinsichtlich der Bauteile Nutenbuchse 11 und Sicherungsring 12 identisch übernommen. Da zudem die Aufnahmeöffnung 31 und die Montageöffnung 32 an Quertraversen 30 von Containeraufliegern stets in standartisierter Form ausgebildet sind, kann somit eine unmittelbare Wechselbarkeit, Ausbau einer herkömmlichen Twist-Lock-Verriegelung und Einbau einer erfindungsgemäßen Verriegelungsvorrichtung 1 erfolgen, wobei die gewechselte Verriegelungsvorrichtung 1 ebenfalls von einer versenkten ersten Stellung in eine vorstehende zweite Stellung manuel verstellbar ausgebildet ist. Zudem enthält die Verriegelungsvorrichtung 1 den bereits genannten Verriegelungsmechanismus 4 zur automatischen Verriegelung beim Beladen der so ausgestatteten Ladefläche 3 mit einem Container 2. Die Funktionsweise ist in den Figuren 4a bis 4c in drei Betätigungszuständen dargestellt. Auf die Details im Mechanismus wird bei der hier gegebenen kurzen Funktionsdarstellung nicht eingegangen.

In Fig. 4a ist der Zustand dargestellt, bei dem die Verriegelungsvorrichtung 1 sich in Laderastposition befindet, also mit einem Container 2 beladen werden kann. Der Container 2 ist mit seinem Eckbeschlag 20 dargestellt.

In Fig. 4b rutscht der Eckbeschlag 20 gerade über den Verriegelungskopf 10, wobei zum Verriegelungsmechanismus 4 gehörende Verriegelungshebel 14, 15 mittels ihrer an der Wandung 21 nahe der Öffnung 22 des Eckbeschlags 20 entlang geführten Auflaufschrägen zueinander verstellt werden.

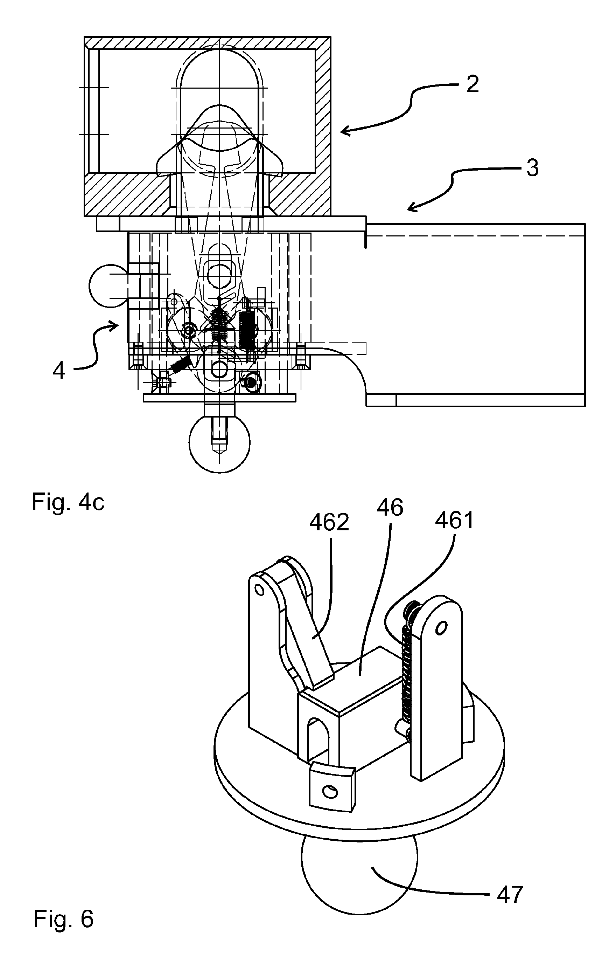

In Fig. 4c ist der Container 2 auf der Ladefläche 3 abgesetzt und die Verriegelungshebel 14, 15 hintergreifen die Wandung 21 im Bereich der Öffnung 22 des Eckbeschlags 20, womit der Container 2 auf der Ladefläche 3 automatisch verriegelt ist.

Fig. 5 zeigt den Verriegelungsmechanismus 4 innerhalb des in Fig. 1 dargestellten zylindrischen Gehäuses 40, das hier entfernt ist. Ferner ist der Verriegelungskopf 10 der Verriegelungsvorrichtung 1 dargestellt. Der Verriegelungskopf 10 weist in der Draufsicht ovalen Querschnitt auf, wobei an den Enden der Längstseiten Zentriermittel 13 vorgesehen sind, die unbeweglich sind und Auflaufschrägen zur Zentrierung eines darauf abzusetzenden Eckbeschlages 20 aufweisen. Die ovale Form des Verriegelungskopfes 10 entspricht der Norm für Container 2, so dass der Verriegelungskopf 10 in die Öffnung 22 des Eckbeschlags 20 von Containern 2 passt. Zwischen den beidseitigen Zentriermitteln 13 ist der Verriegelungskopf 10 aus zwei nebeneinander angeordneten Verriegelungshebeln 14, 15 gebildet, die in Art eines Scherenmechanismuses schwenkbar um eine Achse 41 angeordnet sind. Die Achse 41 ist in Be- und Entladerichtung Z verschiebbar in kurzen Langlöchern 45 im Gehäuse 40 gelagert, wie in Fig. 1 ersichtlich.

Unterhalb der verschiebbaren Achse 41 ist eine feste Achse 44 parallel zur verschiebbaren Achse 41 angeordnet. Auf der verschiebbaren Achse 41 sind der erste Verriegelungshebel 14 und der zweite Verriegelungshebel 15 schwenkbar gelagert, wobei an ihren nach unten vorstehenden Enden jeweils ein Kniehebel 42 zur schwenkbaren Verbindung mit der festen Achse 44 vorgesehen sind. Zwischen der verschiebbaren Achse 41 und der festen Achse 44 ist eine Zugfeder 43 eingespannt, die die verschiebbare Achse 41 in ihrer unteren Stellung federbelastet hält, also die Verriegelungshebel 14, 15 über die Kniehebel 42 in Verriegelungsstellung ausgeschwenkt sind (siehe beispielsweise Figuren 4a, 4c und 5).

Aufgrund der Federvorbelastung verschwenken somit die Verriegelungshebel 14, 15, nachdem sie über die Auflaufschrägen beim Laden gemäß Fig. 4b aufeinander zubewegt wurden, wieder in ihre Verriegelungsstellung, wie in Fig. 4c dargestellt. Dabei sind unterhalb der Köpfe der Verriegelungshebel 14, 15 Schultern 16 ausgebildet, die sich auf der inneren Wandung 21 der Öffnung 22 des Eckbeschlages 20 auflegen, wie in Fig. 4c dargestellt.

Um diese Verriegelungsstellung zu sichern, ist ferner ein Sperrmittel 46 vorgesehen, das sich in Art eines Riegels unterhalb der verschiebbaren Achse 41 zwischen dem Scherenmechanismus der beiden Verriegelungshebel 14, 15 vorschiebt. Die verriegelte Stellung ist in Fig. 4c dargestellt. Das Sperrmittel 46 ist ferner im Detail in Fig. 6 dargestellt. Bei der in Fig. 4c dargestellten Situation befindet sich das Sperrmittel 46 in gesperrter Stellung, womit die beiden Verriegelungshebel 14, 15 nicht zurückgeschwenkt werden können, womit die Verriegelung des Containers 2 auf der Ladefläche 3 zusätzlich gesichert ist.

Durch Ziehen am nach unten vorstehenden Betätigungselement 47, der direkt am Sperrmittel 46 angebracht ist, wird das Sperrmittel 46 entgegen einer innerhalb des Mechanismuses angeordneten Zugfeder 461 aus der Sperrstellung in die Laderastposition, bei der ein Entladen des Containers 2 und ein erneutes Beladen möglich ist, verstellt. Um das Sperrmittel 46 in der Laderastposition, also in der unteren Position gemäß Fig. 5, 4a oder 4b entgegen der Kraft der Feder 461 zu halten, ist eine Klappfalle 462 vorgesehen, die mittels Druckfeder 463 bei Erreichen der Laderastposition vorschnellt und ein Rückstellen des Sperrmittels 46 verhindert.

Beim Beladen wird jedoch über eine in Fig. 5 dargestellte Nase 48 am ersten Verriegelungshebel 14 beim Zustand gemäß Fig. 4b die Klappfalle 462 gegen die Kraft der Druckfeder 463 ausgeschwenkt, so dass das Sperrmittel 46 von der Zugfeder 461 betätigt in die Sperrstellung rutscht.

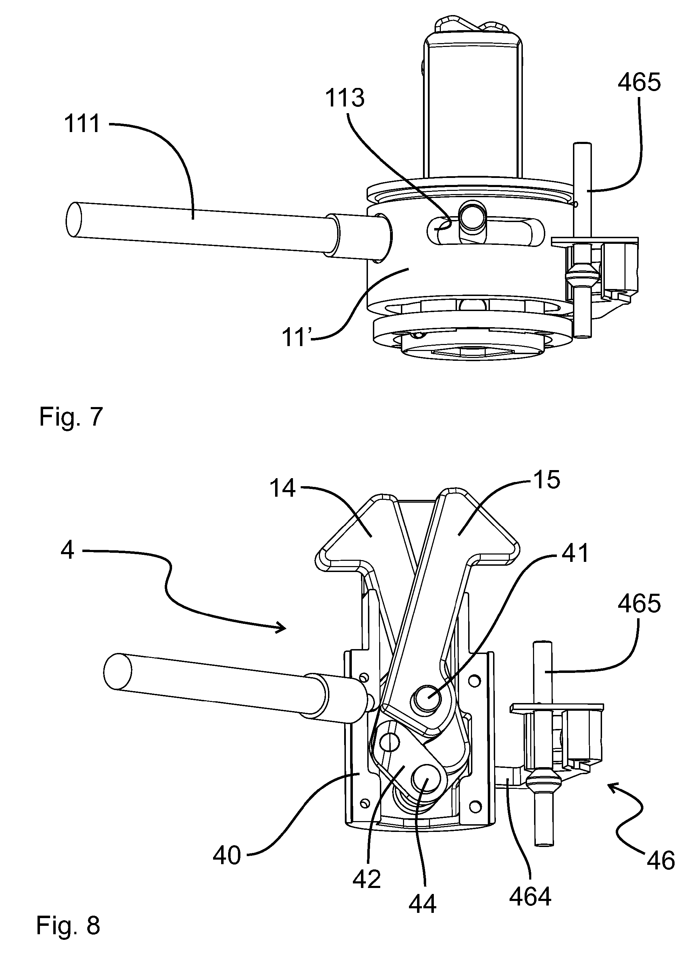

Die Figuren 7 und 8 zeigen ein zweites Ausführungsbeispiels der Verriegelungsvorrichtung, bei der funktionsgleiche Bauteile mit gleichen Bezugszeichen benannt sind. Auch in diesem Beispiel ist die Verriegelungsvorrichtung 1 so ausgebildet, dass der Verriegelungsmechanismus 4 in einem zylindrischen Gehäuse 40, das einen max. Außendurchmesser von 82,5 mm und eine max. Höhe von 97 mm hat, untergebracht ist.

Im Gegensatz zum ersten Ausführungsbeispiel gemäß den Fig. 1 bis 6 ist im zweiten Ausführungsbeispiel die Nutenbuchse von einem versenkbaren Twist-Lock gemäß Stand der Technik durch eine besonders gestaltete Nutenbuchse 11' zu ersetzen. Die Nutenbuchse 11' weist die in bekannter Weise vorgesehene profilierte Öffnung 112 auf, so dass bei entsprechend um die Achse der Nutenbuchse 11' gedrehter Position die gesamte Verriegelungsvorrichtung 1 soweit absenkbar ist, dass sie auf der Ladefläche nicht mehr vorsteht und somit beispielsweise 40-Fuß-Container auf der Ladefläche aufgestellt werden können, ohne dass die Verriegelungsvorrichtung an der Mittenstelle zur Positionierung von zwei 20-Fuß-Containern stören.

Dazu weist jedoch die neue Nutenbuchse 11' in ihrer Zylinderwandung zwei diametral gegenüberliegend angeordnete, umgekehrt T-förmige Langlöcher 113 auf, in die die verschiebbare Achse 41 des Verriegelungsmechanismuses 4 jeweils hineinragt. Entsprechend steht die verschiebbare Achse 41 über der Außenseite des zylindrischen Gehäuses 40 vor. Durch den der Nutenbuchse 11' zugeordneten Betätigungshebel 111 lässt sich die Nutenbuchse 11' in bekannter Weise um deren Zylinderachse verdrehen.

In der in Fig. 7 dargestellten Mittenstellung befindet sich die verschiebbare Achse 41 im mittleren Bereich des umgekehrt T-förmigen Langlochs 113, womit der senkrechte Abschnitt dieses umgekehrt T-förmigen Langlochs 113 in seiner Lage und Orientierung mit dem kurzen Langloch 45 im zylindrischen Gehäuse 40 übereinstimmt. Damit die Nutenbuchse 11' aufgrund ihrer Federvorbelastung nicht in ihre Verriegelungsstellung verdreht wird, ist ein außerhalb des Gehäuses 40 angeordneter Schwenkhebel 464 mit der Nutenbuchse 11' verrastet.

Die in Fig. 7 dargestellte Be- und Entladestellung erlaubt nunmehr, dass ein Container mit seinem Eckbeschlag 20 über den Verriegelungskopf 10 rutscht, dabei die Verriegelungshebel 14 und 15 gegen deren Federbelastung einschwenken (wie gerade in der Fig. 7 dargestellt), und entsprechend mit der Eckbeschlagöffnung 22 daran vorbeirutscht, so dass die Verriegelungshebel 14, 15 federbelastet wieder in die in Fig. 8 dargestellte Stellung verschwenken, wobei dann der Eckbeschlag 20 beziehungsweise der Container 2 mit seiner Wandung 21 auf einen Auslösebolzen 465 trifft, der den Schwenkhebel 464 gegen seine Blattfeder unterstützte Federvorbelastung nach außen drängt und somit die Nutenbuchse 11' freigibt, so dass diese sich entsprechend ihrer Federvorbelastung in die in Fig. 8 dargestellte Stellung verdreht. Das Verschwenken der Verriegelungshebel 14, 15 ist in der in Fig. 7 dargestellten Stellung aufgrund der Koinzidenz des umgekehrt T-förmigen Langlochs 113 mit dem kurzen Langloch 45 möglich, so dass die verschiebbare Achse 41 entsprechend des in dem Gehäuse 40 angeordneten Kniehebelmechanismuses nach oben und wieder nach unten verschoben werden kann.

### Bezugszeichenliste

- 1: Verriegelungsvorrichtung
- 10: Verriegelungskopf
- 11, 11': Nutenbuchse
- 111: Betätigungshebel
- 112: profilierte Öffnung
- 113: umgekehrt T-förmiges Langloch
- 12: Sicherungsring
- 121: Befestigungsschraube
- 13: Zentriermittel
- 14: erster Verriegelungshebel
- 15: zweiter Verriegelungshebel
- 16: Schulter
- 2: Container
- 20: Eckbeschlag
- 21: Wandung
- 22: Öffnung
- 3: Ladefläche
- 30: Quertraverse
- 31: Aufnahmeöffnung
- 32: Montageöffnung
- 4: Verriegelungsmechanismus
- 40: Gehäuse
- 41: verschiebbare Achse
- 42: Kniehebel
- 43: Feder
- 44: feste Achse
- 45: kurzes Langloch
- 46: Sperrmittel
- 461: Feder
- 462: Klappfalle
- 463: Druckfeder
- 464: Schwenkhebel
- 465: Auslösebolzen
- 47: Betätigungselement
- 48: Nase
- Z: Be- und Entladerichtung

## Patentansprüche

1. Verriegelungsvorrichtungsanordnung aufweisend eine Verriegelungsvorrichtung (1) und eine Ladefläche (3) zur Verriegelung eines Containers (2), der standardisierte Eckbeschläge (20) mit einer Öffnung (22) in einer Wandung (21) aufweist, auf der Ladefläche (3), wobei die Ladefläche (3) eine standardisierte Aufnahmeöffnung (31) aufweist, die Verriegelungsvorrichtung (1) in der standardisierten Aufnahmeöffnung (31) der Ladefläche (3) geführt ist und mit einem Verriegelungskopf (10) hervorsteht, wobei der Verriegelungskopf (10) zum Greifen durch die Öffnung (22) hinter die Wandung (21) des Eckbeschlags (20) zur Verriegelung des Containers (2) auf der Ladefläche (3) ausgebildet ist, mit:
- einer unter der standardisierten Aufnahmeöffnung (31) der Ladefläche (3) angeordneten Nutenbuchse (11), in der die Verriegelungsvorrichtung (1) in einer ersten Stellung unter die Ladefläche (3) versenkbar geführt ist und auf der sich die Verriegelungsvorrichtung (1) über die Ladefläche (3) nach oben vorstehend in einer zweiten Stellung abstützt, und
- einem Sicherungsring (12), der die Verriegelungsvorrichtung (1) unterhalb der Ladefläche (3) in einer Montageöffnung (32) in der ersten Stellung hält, wobei die Verriegelungsvorrichtung (1) einen (halb-)automatischen Verriegelungsmechanismus (4) in einem zylindrischen Gehäuse (40) hat, wobei das zylindrische Gehäuse (40) durch die Nutenbuchse (11), die Montageöffnung (32) und den Sicherungsring (12) geführt ist.

2. Verriegelungsvorrichtungsanordnung nach Anspruch 1, **dadurch gekennzeichnet, dass** das zylindrische Gehäuse (40) einen Außendurchmesser d von d ≤ 82,5 mm und eine Höhe h von h ≤ 97 mm aufweist.

3. Verriegelungsvorrichtungsanordnung nach Anspruch 1 oder 2, **dadurch gekennzeichnet, dass** der Verriegelungskopf (10) aus einem ersten Verriegelungshebel (14) und einem zweiten Verriegelungshebel (15) gebildet ist, wobei die Verriegelungshebel (14, 15) in Art eines Scherenmechanismus um eine senkrecht zu einer Be- und Entladerichtung (Z) orientierten und in dieser Richtung verschiebbaren Achse (41) schwenkbar angeordnet sind und die Achse (41) in Beladeposition der Verriegelungsvorrichtung in Richtung zum Eckbeschlag (20) des Containers (2) und in ihrer Grundstellung in Gegenrichtung verschoben ist.

4. Verriegelungsvorrichtungsanordnung nach Anspruch 3, **dadurch gekennzeichnet, dass** die verschiebbare Achse (41) in in dem zylindrischen Gehäuse (40) parallel zur Zylinderachse angeordneten kurze Langlöchern (45) geführt ist.

5. Verriegelungsvorrichtungsanordnung nach Anspruch 3 oder 4, **dadurch gekennzeichnet, dass** ein Sperrmittel (46) vorgesehen ist, das ein unbeabsichtigtes Abheben des Containers (2) verhindert, wobei das Sperrmittel (46) in Richtung der Sperrstellung Feder (461) belastet ist.

6. Verriegelungsvorrichtungsanordnung nach Anspruch 5, **dadurch gekennzeichnet, dass** das Sperrmittel (46) zwischen den Scherenmechanismus greift und somit in der Sperrstellung ein Lösen der Verriegelungshebel (14, 15) verhindert und in einer Freigabestellung ein Verstellen der Verriegelungshebel (14, 15) aus der Grundstellung in die Beladeposition erlaubt.

7. Verriegelungsvorrichtungsanordnung nach Anspruch 5 oder 6, **dadurch gekennzeichnet, dass** das Sperrmittel (46) eine Laderastposition aufweist, in der das Sperrmittel (46) mit einer Klappfalle (462) in der Freigabestellung arretiert ist, wobei beim Beladen durch das Verschwenken der Verriegelungshebel (14, 15) die Klappfalle (462) gegen die Kraft einer Druckfeder (463) verschwenkt wird und die Laderastposition freigegeben wird.

8. Verriegelungsvorrichtungsanordnung nach Anspruch 7, **dadurch gekennzeichnet, dass** das Sperrmittel (46) ein Betätigungselement (47) hat, mit dem eine Bedienperson die Laderastposition einstellen kann, in der das Sperrmittel (46) für den Entladevorgang und den nächsten Beladevorgang in der Freigabestellung arretiert ist.

9. Verriegelungsvorrichtungsanordnung nach Anspruch 5, **dadurch gekennzeichnet, dass** zur Bildung eines Sperrmittels (46) die verschiebbare Achse (41) über der Außenseite des zylindrischen Gehäuses (40) vorsteht und eine Nutenbuchse (11') diametral gegenüberliegend zwei umgekehrt T-förmige Langlöcher (113) aufweist, in die die überstehende, verschiebbare Achse (41) eingreift.

10. Verriegelungsvorrichtungsanordnung nach Anspruch 9, **dadurch gekennzeichnet, dass** die um ihre Achse schwenkbar gelagerte Nutenbuchse (11') in Richtung ihrer Grundstellung Feder vorbelastet ist, wobei in Grundstellung die vorstehende, verschiebbare Achse (41) an einem Ende der T-förmigen Langlöcher (113) sitzt.

11. Verriegelungsvorrichtungsanordnung nach Anspruch 9 oder 10, **dadurch gekennzeichnet, dass** das Sperrmittel (46) eine Laderastposition aufweist, in der das Sperrmittel (46) mit einem Schwenkhebel (464) in der Freigabestellung arretiert ist, wobei beim Beladen durch die Auflast des Containers der Schwenkhebel (464) gegen eine Federblattbelastung zurückschwenkt, womit die Nutenbuchse (11') aufgrund der Federvorbelastung in ihre Mittelstellung verschwenkt.

12. Verriegelungsvorrichtungsanordnung nach einem der vorangehenden Ansprüche, **dadurch gekennzeichnet, dass** die Verriegelungshebel (14, 15) an ihrer auf der Wandung (21) innerhalb des Eckbeschlags (20) zeigenden Seite eine Schulter (16) haben, die in Grundstellung im Wesentlichen orthogonal zur Be- und Entladerichtung (Z) auf der Wandung (21) innerhalb des Eckbeschlags (20) aufliegen und beim Entladen durch das Verschwenken in die Beladeposition eine Auflaufschräge bilden, die das Verschwenken der Verriegelungshebel (14, 15) in die Beladeposition gegen die Kraft der Feder (43) ermöglichen.

## Claims

1. Locking device arrangement comprising a locking device (1) and a loading surface (3) for locking a container (2), which container has standardised corner fittings (20) having an opening (22) in a wall (21), onto the loading surface (3), wherein the loading surface (3) has a standardised receiving opening (31), the locking device (1) is guided into the standardised receiving opening (31) of the loading surface (3) and a locking head (10) of said device protrudes from said opening, wherein the locking head (10) is designed to engage through the opening (22) behind the wall (21) of the corner fitting (20) in order to lock the container (2) onto the loading surface (3), comprising:
- a grooved bushing (11) arranged below the standardised receiving opening (31) of the loading surface (3), in which grooved bushing the locking device (1) is guided in a first position so as to be lowerable under the loading surface (3), and on which grooved bushing the locking device (1) is supported so as to project above the loading surface (3) in a second position, and
- a retaining ring (12) which holds the locking device (1) underneath the loading surface (3) in an assembly opening (32) in the first position,
wherein the locking device (1) comprises a (semi-) automatic locking mechanism (4) in a cylindrical housing (40), wherein the cylindrical housing (40) is guided through the grooved bushing (11), the assembly opening (32) and the retaining ring (12).

2. Locking device arrangement according to claim 1, **characterised in that** the cylindrical housing (40) has an outer diameter d of d ≤ 82.5 mm and a height h of h ≤ 97 mm.

3. Locking device arrangement according to either claim 1 or claim 2, **characterised in that** the locking head (10) is formed by a first locking lever (14) and a second locking lever (15), the locking levers (14, 15) being pivotably arranged in the manner of a scissor mechanism about a shaft (41) which is oriented perpendicularly to a loading and unloading direction (Z) and is slidable in said direction, the shaft (41) being slid in the direction of the corner fitting (20) of the container (2) in the loading position of the locking device and being slid in the opposite direction in the basic position of said locking device.

4. Locking device arrangement according to claim 3, **characterised in that** the slidable shaft (41) is guided in short slots (45) arranged parallel to the cylinder axis in the cylindrical housing (40).

5. Locking device arrangement according to either claim 3 or claim 4, **characterised in that** a blocking means (46) is provided which prevents unintentional lifting of the container (2), the blocking means (46) being spring biased by a spring (461) towards the blocking position.

6. Locking device arrangement according to claim 5, **characterised in that** the blocking means (46) engages between the scissor mechanism and thus, in the locking position, prevents disengagement of the locking levers (14, 15) and, in a release position, allows locking levers (14, 15) to be repositioned out of the basic position into the loading position.

7. Locking device arrangement according to either claim 5 or claim 6, **characterised in that** the blocking means (46) has a loading latched position in which the blocking means (46) is locked in the release position by means of a hinged latch (462), the hinged latch (462) being pivoted against the force of a compression spring (463) and the loading latched position being released during loading by means of pivoting the locking levers (14, 15).

8. Locking device arrangement according to claim 7, **characterised in that** the blocking means (46) has an actuating element (47) by means of which an operator can adjust the loading latched position in which the blocking means (46) is locked in the release position for the unloading and the next loading operation.

9. Locking device arrangement according to claim 5, **characterised in that**, in order to form a blocking means (46), the slidable shaft (41) projects beyond the outside of the cylindrical housing (40) and a grooved bushing (11') has two diametrically opposed inverted T-shaped slots (113), into which the projecting slidable shaft (41) engages.

10. Locking device arrangement according to claim 9, **characterised in that** the grooved bushing (11') that is mounted so as to be pivotable about its axis is spring biased towards its basic position, the protruding slidable shaft (41) resting on one end of the T-shaped slots (113) in the basic position.

11. Locking device arrangement according to either claim 9 or claim 10, **characterised in that** the blocking means (46) has a loading latched position in which the blocking means (46) is locked by means of a pivot lever (464) in the release position, the pivot lever (464) pivoting back against a spring blade load during loading on account of the weight of the container, as a result of which the grooved bushing (11') is pivoted into its middle position due to the spring bias.

12. Locking device arrangement according to any of the preceding claims, **characterised in that** the locking levers (14, 15) each have a shoulder (16) on the side thereof facing the wall (21) inside the corner fitting (20), which shoulders rest substantially orthogonally to the loading and unloading direction (Z) on the wall (21) inside the corner fitting (20) in the basic position and, during unloading, form a ramp due to the pivoting into the loading position, which ramp allows the pivoting of the locking levers (14, 15) into the loading position against the force of the spring (43).

## Revendications

1. Système de dispositif de verrouillage comprenant un dispositif de verrouillage (1) et une surface de chargement (3) pour verrouiller sur la surface de chargement (3) un conteneur (2) qui présente des ferrures d'angle (20) normalisées avec une ouverture (22) dans une paroi (21), la surface de chargement (3) présentant une ouverture de réception (31), le dispositif de verrouillage (1) étant guidé dans l'ouverture de réception (31) de la surface de chargement (3) et saillant avec une tête de verrouillage (10), la tête de verrouillage (10) étant conçue pour s'engrener à travers l'ouverture (22) derrière la paroi (21) de la ferrure d'angle (20) pour verrouiller le conteneur (2) sur la surface de chargement (3), avec
- une douille à rainure (11) disposée en dessous de l'ouverture de réception normalisée (31) de la surface de chargement (3), douille dans laquelle le dispositif de verrouillage (1) est guidé pour être abaissé dans une première position en dessous de la surface de chargement (3) et sur laquelle le dispositif de verrouillage (1) s'appuie en saillant vers le haut au-dessus de la surface de chargement (3) dans une deuxième position, et
- une bague de sécurité (12) qui maintient le dispositif de verrouillage (1) dans la première position en dessous de la surface de chargement (3) dans une ouverture de montage (32),
le dispositif de verrouillage (1) présentant un mécanisme de verrouillage (4) (semi)automatique dans un boîtier cylindrique (40), le boîtier cylindrique (40) étant guidé à travers la douille à rainure (11), l'ouverture de montage (32) et la bague de sécurité (12).

2. Système de dispositif de verrouillage selon la revendication 1, **caractérisé en ce que** le boîtier cylindrique (40) a un diamètre extérieur d de d ≤ 82,5 mm et une hauteur h de h ≤ 97 mm.

3. Système de dispositif de verrouillage selon la revendication 1 ou 2, **caractérisé en ce que** la tête de verrouillage (10) est formée d'un premier levier de verrouillage (14) et d'un deuxième levier de verrouillage (15), les leviers de verrouillage (14, 15) étant disposés à la manière d'un mécanisme de pantographe de façon pivotante autour d'un axe (41) orienté perpendiculairement à la direction de chargement et de déchargement (Z) et pouvant se déplacer dans cette direction, et l'axe (41) étant déplacé en direction de la ferrure d'angle (20) du conteneur (2) dans la position de chargement du dispositif de verrouillage et en direction inverse dans sa position de repos.

4. Système de dispositif de verrouillage selon la revendication 3, **caractérisé en ce que** l'axe mobile (41) est guidé dans de courts trous oblongs (45) disposés dans le boîtier cylindrique (40) parallèlement à l'axe du cylindre.

5. Système de dispositif de verrouillage selon la revendication 3 ou 4, **caractérisé en ce qu'**un moyen de blocage (46) est prévu qui empêche un soulèvement involontaire du conteneur (2), le moyen de blocage (46) étant contraint en direction de blocage par un ressort (461).

6. Système de dispositif de verrouillage selon la revendication 5, **caractérisé en ce que** le moyen de blocage (46) s'engrène entre le mécanisme de pantographe et ainsi empêche en position de blocage une libération des leviers de verrouillage (14, 15) et permet en position de libération un déplacement des leviers de verrouillage (14, 15) depuis la position de repos dans la position de chargement.

7. Système de dispositif de verrouillage selon la revendication 5 ou 6, **caractérisé en ce que** le dispositif de blocage (46) présente une position d'encliquetage de chargement dans laquelle le moyen de blocage (46) est bloqué dans la position de libération avec un loqueteau rabattable (462), le loqueteau rabattable (462) étant, lors du chargement, pivoté contre la force d'un ressort de pression (463) par le pivotement des leviers de verrouillage (14, 15) et libérant la position d'encliquetage de chargement.

8. Système de dispositif de verrouillage selon la revendication 7, **caractérisé en ce que** le moyen de blocage (46) présente un élément d'actionnement (47) au moyen duquel un opérateur peut régler la position d'encliquetage de chargement dans laquelle le moyen de blocage (46) est bloqué dans la position de libération pour le processus de déchargement et le processus de chargement suivant.

9. Système de dispositif de verrouillage selon la revendication 5, **caractérisé en ce que** pour former un moyen de blocage (46), l'axe mobile (41) saille au-delà de la face extérieure du boîtier cylindrique (40) et une douille à rainure (11') présente deux trous oblongs en forme de T inversé (113) diamétralement opposés dans lesquels s'engage l'axe mobile saillant (41).

10. Système de dispositif de verrouillage selon la revendication 9, **caractérisé en ce que** la douille à rainure (11') logée pivotante autour de son axe est précontrainte par ressort en direction de sa position de repos, l'axe mobile saillant (41) reposant, dans la position de repos, à une extrémité des trous oblongs en forme de T (113).

11. Système de dispositif de verrouillage selon la revendication 9 ou 10, **caractérisé en ce que** le moyen de blocage (46) présente une position d'encliquetage de chargement dans laquelle le moyen de blocage (46) est bloqué dans une position de libération avec un levier pivotant (464), le levier pivotant (464), lors du chargement, repivotant contre l'effet d'une lame-ressort sous l'effet de la charge du container, la douille à rainure (11') étant alors basculée dans sa position intermédiaire en raison de la précontrainte par ressort.

12. Système de dispositif de verrouillage selon l'une des revendications précédentes, **caractérisé en ce que** le les leviers de verrouillage (14, 15) comportent un épaulement (16) sur leur côté dirigé vers la paroi (21) située à l'intérieur de la ferrure d'angle (20), lesquels épaulements, en position de repos, reposent sur la paroi (21) située à l'intérieur de la ferrure d'angle (20) essentiellement de façon orthogonale à la direction de chargement et de déchargement (Z), et forment lors du déchargement suite au basculement en position chargement un plan incliné qui permet le basculement des leviers de verrouillage (14, 15) dans la position de chargement contre la force d'un ressort (43).
